# EUROPEAN PATENT APPLICATION

(11) **EP 2 328 093 A2**
(43) Date of publication of application: **01.06.2011**
(21) Application number: 10189316.2
(22) Date of filing: 28.10.2010
(51) Int. Cl.: G06F 13/38

(54) **Terminal device, media processing apparatus connected to terminal device, and controlling method thereof**

(30) Priority: 27.11.2009 KR 20090115853
(71) Applicant: Samsung Electronics Co., Ltd., Suwon-si, Gyeonggi-do 442-742 (KR)
(72) Inventor: Cho, Bong-hwan, Gyeonggi-do (KR)
(74) Representative: Brandon, Paul Laurence

(57) **Abstract**

A method of controlling a media processing apparatus connected to a plurality of terminal devices involves a first terminal device controlling the media processing apparatus and providing an error message to a second terminal that attempts to control the media processing apparatus while the first terminal is already controlling the media processing apparatus.

## Description

### CROSS-REFERENCE TO RELATED APPLICATIONS

This application claims priority under 35 U.S.C. § 119 from Korean Patent Application No. 10-2009-0115853, filed on November 27, 2009, in the Korean Intellectual Property Office, the disclosure of which is incorporated herein by reference in its entirety.

### BACKGROUND

### 1. Field

Apparatuses and methods consistent with the present disclosure relate to a terminal device, a media processing apparatus connected to the terminal device, and a controlling method thereof, and more particularly, to a plurality of terminal devices, a media processing apparatus which is connected to the plurality of terminal devices and provides an appropriate message in response to a control attempt by a user, and a controlling method thereof.

### 2. Description of the Related Art

The development of electronic technologies has brought various types of electronic devices.

Generally, a display device such as a television (TV) is used in each room of a house. On the other hand, a house generally has only one media processing device that provides a media signal.

Under such a circumstances, a user needs to move to a place having a display apparatus connected to a media processing apparatus in order to view a media signal. To resolve the above problem, the media processing apparatus can be connected to each display apparatus so that a media signal, which is reproduced by the media processing apparatus in one space, may be output through a display apparatus in another room.

However, in this case, a problem may arise regarding the right to control the operation of the media processing apparatus. That is, if a first user is using the media processing apparatus in a room while a second user attempts to use the media processing apparatus in another room, the second user may not be able to control the media processing apparatus.

In this case, the second user may not recognize why the media processing apparatus does not operate as intended, and may incorrectly believe that there is a problem with the media processing apparatus, the display apparatus, a remote controller, or a connection between the apparatuses. Thus, the user may try to unnecessarily repair the apparatuses.

### SUMMARY

Exemplary embodiments address at least the above problems and/or other disadvantages not described above. Also, the present invention is not required to overcome the disadvantages described above, and an exemplary embodiment may not overcome any of the problems described above.

The exemplary embodiments provide a terminal device that provides a message related to controlling a media processing apparatus, which enhances a user's convenience, a media processing apparatus connected to the terminal device, and a controlling method thereof.

According to an exemplary embodiment, there is provided a method of controlling a media processing apparatus that is connected to each of a first terminal device and a second terminal device through a communication interface, the method including receiving a first control signal that instructs the media processing apparatus to perform a first operation from the first terminal device over a first data channel between the media processing apparatus and the first terminal device through the communication interface; performing the first operation in response to receiving the first control signal; and while performing the first operation, providing an error message to the second terminal device over a second data channel between the media processing apparatus and the second terminal device, in response to receiving a second control signal that instructs the media processing apparatus to perform a second operation transmitted from the second terminal device.

The controlling method may further include generating a notification message corresponding to the second terminal device; adding the generated notification message to a video signal provided to the first terminal device to generate a multiplexed video signal; and transmitting the multiplexed video signal to the first terminal device through a video channel between the media processing apparatus and the first terminal device.

The controlling method may further include generating a notification message corresponding to the second terminal device; and transmitting the notification message to the first terminal device through a data channel between the media processing apparatus and the first terminal device.

According to another exemplary embodiment, there is provided a method of controlling a first terminal device that is connected to a media processing apparatus through a communication interface, the method including receiving a control signal that controls the media processing apparatus; transmitting the control signal to the media processing apparatus through a data channel between the first terminal device and the media processing apparatus; receiving an error message that indicates the media processing apparatus is controlled by a second terminal device from the media processing apparatus through the data channel, in response to transmitting the control signal; and outputting the received error message.

According to another exemplary embodiment, there is provided a method of controlling a first terminal device that is connected to a media processing apparatus through a communication interface, the method including receiving a control signal that controls the media processing apparatus; transmitting the control signal to the media processing apparatus through a data channel between the first terminal device and the media processing apparatus, and controlling an operation of the media processing apparatus with the control signal; and receiving a notification message that indicates a second terminal device is attempting to control the media processing apparatus from the media processing apparatus and outputting the notification message, in response to the second terminal device attempting to control the media processing apparatus.

According to another exemplary embodiment, there is provided a media processing apparatus, including an interface unit that is connected to each of a first terminal device and a second terminal device through a communication interface; a signal processing unit that generates a media signal, and provides the medial signal through the communication interface over at least one of a video channel and an audio channel; and a control unit that controls an operation of the media processing apparatus in response to receiving a first control signal for controlling the media processing apparatus from the first terminal device and, while the media processing apparatus is controlled according to the first control signal received from the first terminal device, transmits an error message to the second terminal device through the data channel in response to receiving a second control signal for controlling the media processing apparatus from the second terminal device.

The signal processing unit may include a storage unit that stores message data; a rendering unit that generates a notification message corresponding to the second terminal device using the message data stored in the storage unit; and a multiplexer that multiplexes the rendered notification message into a video signal provided to the first terminal device, wherein the control unit transmits the multiplexed video signal to the first terminal device through the video channel between the media processing apparatus and the first terminal device.

The control unit may transmit the notification message corresponding to the second terminal device to the first terminal device through the data channel between the media processing apparatus and the first terminal device.

According to another exemplary embodiment, there is provided a terminal device, including an input unit that receives a control signal to control a media processing apparatus; an interface unit, connected to the media processing apparatus through a communication interface, that transmits the control signal to the media processing apparatus through over a data channel between the terminal device and the media processing apparatus; a control unit that receives an error message from the media processing apparatus through the data channel in response to a second terminal device attempting to control the media processing apparatus; and an output unit which outputs the error message.

According to another exemplary embodiment, there is provided a terminal device, including an input unit that receives a control signal to control a media processing apparatus over one of a video channel, an audio channel, and a data channel; an interface unit, connected to the media processing apparatus through a communication interface; an output unit that, in response to receiving a media signal from the media processing apparatus through the communication interface over at least one of a video channel and an audio channel between the terminal device and the media processing apparatus, processes the received media signal, and outputs at least one of a video signal and an audio signal of the media signal; and a control unit that transmits the control signal to the media processing apparatus through the data channel, and controls an operation of the media processing apparatus, wherein the control unit, in response to a second terminal device attempting to control the media processing apparatus while the media processing apparatus is controlled by the terminal device, receives a notification message indicating that the second terminal device is attempting to control the media processing apparatus from the media processing apparatus, and outputs the notification message through the output unit.

### BRIEF DESCRIPTION OF THE DRAWINGS

The above and/or other aspects will be more apparent by describing certain exemplary embodiments with reference to the accompanying drawings, in which:

FIG. 1 is a view illustrating the structure of a system according to an exemplary embodiment;

FIG. 2 is a view illustrating screens of a system according to an exemplary embodiment;

FIG. 3 is a block diagram illustrating a media processing apparatus according to an exemplary embodiment;

FIG. 4 is a block diagram illustrating a media processing apparatus according to an exemplary embodiment;

FIG. 5 is a block diagram illustrating a signal processing unit provided in a media processing apparatus according to an exemplary embodiment;

FIG. 6 is a block diagram illustrating a terminal device according to an exemplary embodiment; and

FIG. 7 is a flowchart provided to explain a method of controlling a media processing apparatus according to an exemplary embodiment.

### DETAILED DESCRIPTION OF EXEMPLARY EMBODIMENTS

Certain exemplary embodiments will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in detail, since they would obscure the invention with unnecessary detail.

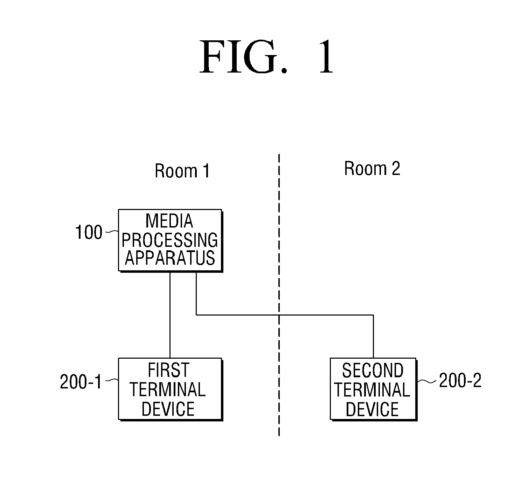

FIG. 1 is a view illustrating the structure of a system according to an exemplary embodiment. Referring to FIG. 1, the system may include a plurality of terminal devices 200-1, 200-2 and a media processing apparatus 100. Two terminal devices 200-1, 200-2 and one media processing apparatus 100 are illustrated in FIG. 1, but the number of each of the devices is not limited thereto.

The terminal devices 200-1, 200-2 may be various kinds of devices, such as a TV, a personal computer (PC), a monitor, a digital photo frame, a laptop computer, an audio player, and a speaker, which can output an image or a sound. The media processing apparatus 100 is a device which can output a media signal to various sources. For example, the media processing apparatus 100 may be a settop box, which receives and processes a broadcast signal, a digital versatile disc (DVD) player, a blue-ray disc player, a videocassette recorder (VCR), an audio player, or an MPEG layer 3 (MP3) player, which retrieves data from various types of storage medium and reproduces a signal. The media signal may refer to a signal including at least one of a TV broadcast signal, a DVD reproducing signal, a Blue-ray disc reproducing signal, an audio signal, a VCR reproducing signal, video data, audio data, and so on.

In FIG. 1, the first terminal device 200-1 and the media processing apparatus 100 are located in the same environment (Room 1), and the second terminal device 200-2 is located in another environment (Room 2). The first and the second terminal devices 200-1, 200-2 are connected to the media processing apparatus 100, respectively.

A communication interface between the media processing apparatus 100 and each of the first and the second terminal devices 200-1, 200-2 may be an interface which includes a video channel, an audio channel, and a data channel. Herein, the video channel and the audio channel operate as interfaces over which a video signal and an audio signal are transmitted and received, respectively. The data channel operates as an interface over which various data, such as a control signal, a synchronization signal, universal serial bus (USB) data, and an Ethernet signal, are transmitted and received. The media processing apparatus 100 may be connected to the plurality of terminal devices 200-1, 200-2 in a daisy-chain fashion as shown in FIG. 1. For example, the communication interface between the media processing apparatus 100 and each of the first and the second terminal devices 200-1, 200-2 may be implemented as an S-link interface.

The S-link interface is an interface whose functions are extended from the functions of a High-Definition Multimedia Interface (HDMI). HDMI is a standard for the use of audio/video (A/V) by transmitting a video signal and an audio signal, together with a control signal, while maintaining compatibility with a digital visual interface (DVI). The S-link interface has characteristics similar to those of the HDMI.

Since each of the first terminal device 200-1 and the second terminal device 200-2 is connected to the media processing apparatus 100, each user of the first and the second terminal devices 200-1, 200-2 may control the media processing apparatus 100 to receive a media signal. In this case, a user who first accesses the media processing apparatus 100, or a user who has the priority, has the authority to control the media processing apparatus 100.

According to an exemplary embodiment with reference to FIG. 1, a user of the first terminal device 200-1 may input a control signal to control the media processing apparatus 100. For example, if the media processing apparatus 100 is a DVD player, the user may input a command to play a DVD loaded in the DVD player by selecting a playback button.

In this case, the user may control the media processing apparatus 100 by a control signal generated from pressing keys provided on the first terminal device 200-1, by pressing keys provided on the media processing apparatus 100, or by manipulating a remote controller that generates control signals to control the first terminal device 200-1 or the media processing apparatus 100. If the remote controller or the keys for the first terminal device 200-1 is manipulated, the first terminal device 200-1 may transmit an input control signal to the media processing apparatus 100 over a data channel connected to the media processing apparatus 100. The first terminal device 200-1 may forward the control signal without modification, or may convert the control signal into a control command having a format corresponding to the media processing apparatus 100 and forward the converted control command. For convenience of explanation, the control command will be assumed to be included in the control signal.

The media processing apparatus 100 operates in response to the received control command, and if a media signal is generated by the operation, the media processing apparatus 100 may transmit the generated media signal to the first terminal device 200-1 using at least one of a video channel and an audio channel. For example, if the generated media signal is a motion picture signal, the media processing apparatus 100 may use both the video channel and the audio channel to transmit the signal, and if the generated media signal is an audio signal or a video signal, such as a picture that will be displayed on a digital photo frame, only either the audio channel or the video channel may be used.

If a control signal is input from the second terminal device 200-2, the second terminal device 200-2 may transmit a control command for controlling the media processing apparatus 100 to the media processing apparatus 100. The media processing apparatus 100 recognizes that the first terminal device 200-1 is already controlling the media processing apparatus 100, and transmits an error message to the second terminal device 200-2. The error message is transmitted over a data channel which is connected to the second terminal device 200-2. The second terminal device 200-2 may notify a user of the second terminal device 200-2 that the media processing apparatus 100 is unavailable by outputting the error message to the user. In this case, the second terminal device 200-2 may receive a media signal from the media processing apparatus 100, or in another exemplary embodiment, may not receive any signal except for the error message until the second terminal device 200-2 has the authority to control the media processing apparatus 100.

The error message may be output on a screen of the second terminal device 200-2 as a video message. The error message may include information regarding which terminal device is currently using the media processing apparatus 100 or which terminal device owns the right to control the media processing apparatus 100. Accordingly, a user may easily check the current state of the media processing apparatus 100 by viewing the error message. The error message may be implemented as an audio message instead of a video message, and output through a speaker.

The media processing apparatus 100 may transmit a notification message to the first terminal device 200-1. Herein, the notification message may be transmitted over a data channel, a video channel, or an audio channel.

That is, if the media processing apparatus 100 transmits a video signal to the first terminal device 200-1, the media processing apparatus 100 renders a notification message, and multiplexes the rendered image, that is the notification message, into the video signal. By doing so, an image including the notification message is transmitted to the first terminal device 200-1. The first terminal device 200-1 may provide the notification message only by scaling the video signal transmitted from the media processing apparatus 100 and then outputting the scaled video signal on a screen. The notification message may be various texts or images which notify that another user has tried to use the media processing apparatus 100.

Alternatively, the media processing apparatus 100 may generate the notification message in a form of a voice message, multiplex the notification message into an audio signal, and provide the first terminal device 200-1 with the multiplexed message over an audio channel. Such a notification message may be output through a speaker.

Alternatively, the media processing apparatus 100 may provide the first terminal device 200-1 with the notification message over a data channel. That is, the media processing apparatus 100 may provide the first terminal device 200-1 with a command to display the notification message or data regarding contents of the notification message. Accordingly, the first terminal device 200-1 may convert the notification message into an on screen display (OSD), a rendered image, an audio message, and so on, and then output the converted message.

The media processing apparatus 100 may incorporate information regarding the second terminal device 200-2 into the notification message. Accordingly, the first terminal device 200-1 may notify which terminal device attempts to control the media processing apparatus 100.

Since a user who uses the first terminal device 200-1 has the right to control the media processing apparatus 100, the user may determine whether to provide the second terminal device 200-2 with a media signal. That is, the notification message may include a message which inquires whether to provide the second terminal device 200-2 with a media signal. Accordingly, if a selection signal, which allows the media signal to be provided, is input on the first terminal device 200-1, the media processing apparatus 100 provides the second terminal device 200-2 with the same media signal as the media signal provided to the first terminal device 200-1. On the other hand, if the first terminal device 200-1 does not respond, or expresses rejection, the media processing apparatus 100 may not provide any signal to the second terminal device 200-2.

In another exemplary embodiment, the media processing apparatus 100 may provide the second terminal device 200-2 with the same media signal as the media signal provided to the first terminal device 200-2 without the approval of the first terminal device 200-1. However, the second terminal device 200-2 may not control the operation of the media processing apparatus 100 as long as the first terminal device 200-1 has the authority to control the media processing apparatus 100.

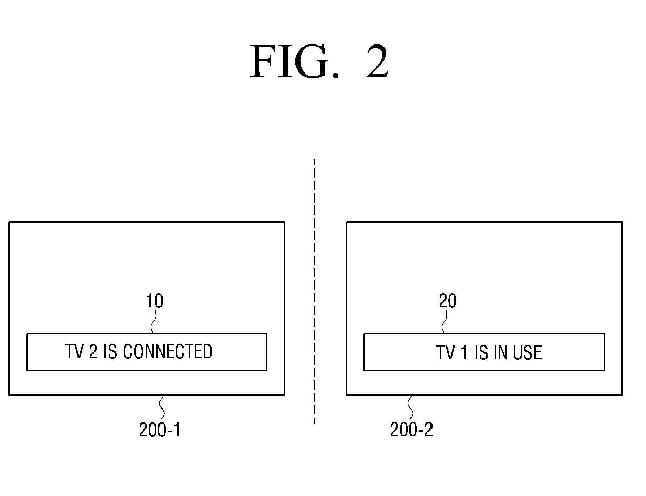

FIG. 2 is a view illustrating a notification message and an error message displayed on the system of FIG. 1 according to an exemplary embodiment. Referring to FIG. 2, a notification message 10 is displayed on the first terminal device 200-1, and an error message 20 is displayed on the second terminal device 200-2.

If the first and the second terminal devices 200-1, 200-2 are implemented as televisions TV 1 and TV 2, respectively, the notification message 10 may indicate that the TV 2 has attempted to contact the media processing apparatus 100 and the error message 20 may indicate that the TV 1 has the right to control the media processing apparatus 100.

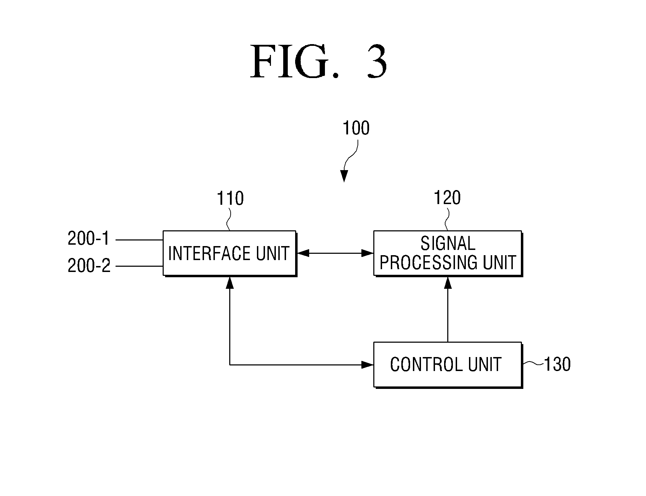

FIG. 3 is a block diagram illustrating the media processing apparatus 100 according to an exemplary embodiment. Referring to FIG. 3, the media processing apparatus 100 may include an interface unit 110, a signal processing unit 120, a control unit 130.

The interface unit 110 is connected to a plurality of terminal devices 200-1, 200-2 in a daisy-chain fashion. The plurality of terminal devices 200-1, 200-2 may be connected to each other through a communication interface including a video channel, an audio channel, and a data channel.

The signal processing unit 120 generates a media signal according to a control signal input through the interface unit 110. As described above, the media processing apparatus 100 may be a broadcast receiving apparatus that receives a data stream from an external source and generates a media signal, or a media player that plays back a media signal through a media source mounted on the media processing apparatus 100. If the media processing apparatus 100 is a broadcast receiving apparatus, the signal processing unit 120 may include various elements, such as a tuner, a demodulator, an equalizer, a decoder, a de-interleaver, a reverse-randomizer, a de-multiplexer, and so on, which are not shown in FIG. 3 for convenience.

The control unit 130 controls the signal processing unit 120 according to a control signal input through the interface unit 110. The control unit 130 may be a microprocessor, such as a central processing unit (CPU).

In particular, if a control signal is input from one of the plurality of terminal devices (for instance, the second terminal device 200-2) connected to the media processing apparatus 100 through the interface unit 110, while the media processing apparatus 100 operates in response to another control signal that is input from another terminal device (for instance, the first terminal device 200-1), the control unit 130 transmits an error message to the second terminal device 200-2, and a notification message to the first terminal device 200-1.

The error message may be transmitted over a data channel established between the media processing apparatus 100 and the second terminal device 200-2 in a data stream format. In this case, the control unit 130 may transmit the error message together with information indicating that the first terminal device 200-1 is currently controlling the media processing apparatus 100. Such information may be transmitted in a manner of recording data that specifies the first terminal device 200-1 in a predetermined filed of the error message, or in a data stream separate from the error message. If the error message is transmitted over a data channel, the second terminal device 200-2 may render the error message and then display the rendered error message on a screen of the second terminal device 200-2, or may convert the error message into a voice message and then output the converted error message via a speaker.

The notification message may be transmitted between the first terminal device 200-1 and the media processing apparatus 100 over a video channel, an audio channel, or a data channel. That is, if the video channel or the audio channel is used, the control unit 130 controls the signal processing unit 120 to multiplex the error message into a video signal or an audio signal, and transmits the multiplexed signal to the first terminal device 200-1 without modification. Accordingly, the first terminal device 200-1 outputs the received signal on a screen or through a speaker.

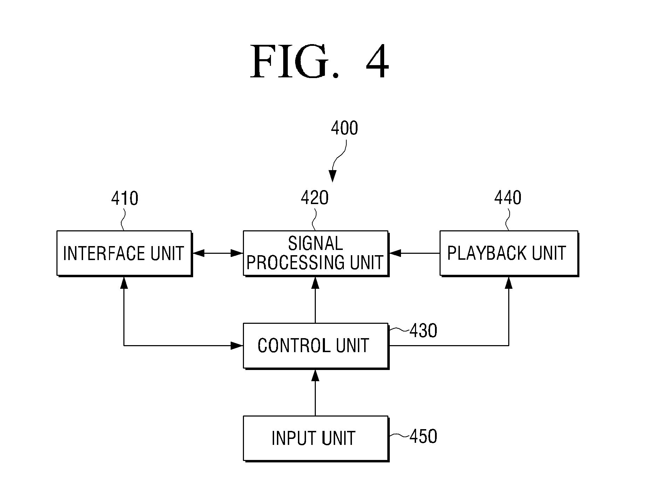

FIG. 4 is a block diagram illustrating a media processing apparatus 400 according to another exemplary embodiment. Referring to FIG. 4, the media processing apparatus 400 may include an interface unit 410, a signal processing unit 420, a control unit 430, a playback unit 440, and an input unit 450.

Since the operations of the interface unit 410 and the signal processing unit 420 are identical to the interface unit 110 and the signal processing unit 120 of FIG. 3, detailed explanation will not be provided.

The playback unit 440 may include a housing unit (not shown) in which a storage medium is mounted or a storage unit (not shown) which stores a media signal. The storage medium may be a memory, such as a read-only memory (ROM), a random access memory (RAM), flash memory, or the like.

The input unit 450 may receive a signal from a remote controller.

The control unit 430 controls the playback unit 440 and the signal processing unit 430 according to a control signal input from a terminal device 200-1, 200-2 having the right to control the media processing apparatus 100 or a control signal which is input directly through the input unit 450. The control unit 430 may be a microprocessor, such as a central processing unit (CPU).

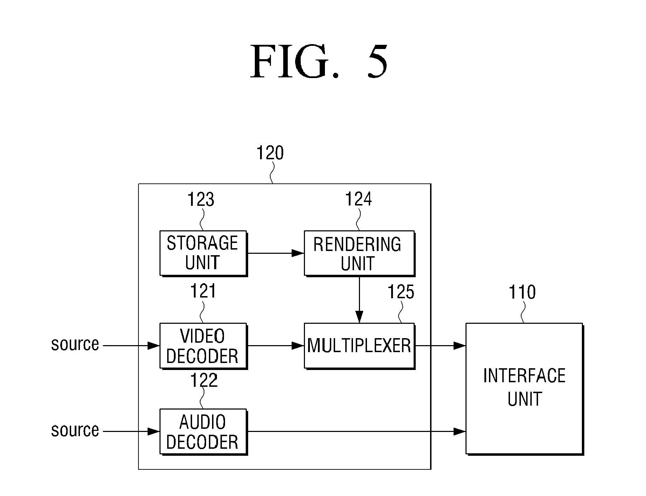

FIG. 5 is a block diagram illustrating the signal processing unit 120 included in the media processing apparatus 100 of FIG. 3.

The signal processing unit 120 may include a video decoder 121, an audio decoder 122, a storage unit 123, a rendering unit 124, and a multiplexer 125. Though not illustrated in FIG. 5, a de-multiplexer that separates a video signal and an audio signal from a signal provided from an external source may further be provided inside the signal processing unit 120 or on a front end of the signal processing unit 120.

The video decoder 121 decodes a video signal among signals provided from an external source, and the audio decoder 122 decodes an audio signal among signals provided from an external source. Various types of decoders, such as a viterbi decoder and a turbo decoder, may be used as the video decoder 121 and the audio decoder 122.

The storage unit 123 may store data to configure various messages. The storage unit 123 may be a memory, such as a read-only memory (ROM), a random access memory (RAM), flash memory, or the like.

The rendering unit 124 may generate a rendered message using data stored in the storage unit 123.

The multiplexer 125 multiplexes the rendered message into a video signal output from the video decoder 121. The video signal, into which the rendered message is multiplexed, is transmitted to a terminal device 200-1, 200-2 through the interface unit 110.

The rendering unit 124 may generate an error message, as well as a notification message, by the rendering process. To generate a video signal, into which the error message is multiplexed, and a video signal, into which the notification message is multiplexed, and transmit the generated signals to each terminal device, two signal processing modules are required. Accordingly, the rendering unit 124 multiplexes one of the notification message and the error message into a video signal, transmits the multiplexed signal to one of the first and the second terminal devices 200-1, 200-2. The rendering unit 124 then transmits the other message to the other terminal device over a data channel so that the other terminal device itself performs rendering.

While the exemplary embodiment for multiplexing a message into a video signal is illustrated in FIG. 5, a message may be multiplexed into an audio signal and then provided to a terminal device. This is apparent to the skilled artisan, thus drawings and explanations are omitted.

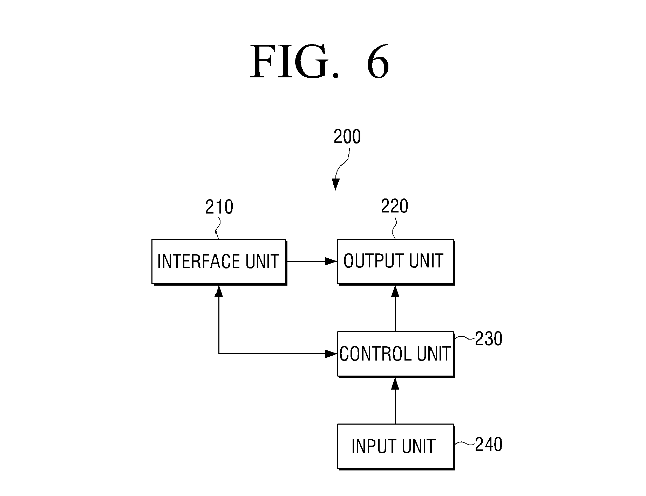

FIG. 6 is a block diagram illustrating a terminal device 200 according to an exemplary embodiment. Either or both of the first terminal device 200-1 and the second terminal device 200-2 of FIG. 1 may be implemented as the terminal device 200 illustrated in FIG. 6.

Referring to FIG. 6, the terminal device 200 may include an interface unit 210, an output unit 220, a control unit 230, and an input unit 240.

The interface unit 210 is connected to the media processing apparatus 100 through a communication interface including a video channel, an audio channel, and a data channel.

The output unit 220 processes the media signal received through the interface unit 210, and then outputs at least one of a video signal and an audio signal. For example, the output unit 220 may include a scaler, a decoder, a display panel, a speaker, and so on. The output unit 220 converts the video signal and the audio signal transmitted from the media processing apparatus 100 to a displayable format, scales the converted signals, and outputs the scaled signals.

The control unit 230 communicates with the media processing apparatus 100 through the interface unit 210, and controls the output unit 220 to process the media signal provided by the media processing apparatus 100. The control unit 230 may be a microprocessor, such as a central processing unit (CPU).

The input unit 240 transmits a control signal input by a user to the control unit 230.

If a control signal is input through the input unit 240 when the terminal device 200 of FIG. 6 operates as the first terminal device 200-1 of FIG. 1, the control unit 230 may transmit the input control signal to the media processing apparatus 100 over a data channel of the interface unit 210. For instance, the control unit 230 may transmit a command to play back content, fast forward content, rewind content, or turn the media processing apparatus 100 on or off.

If a media signal is input over at least one of the video channel and the audio channel of the interface unit 210 according to such a control signal, the output unit 220 processes a media signal and outputs the processed signal through at least one of a screen and a speaker.

If a control signal for the media processing apparatus 100, for example, a playback command, a fast forward command, a rewind command, and a turn on or off command, is input on the second terminal device 200-2, the interface unit 210 may receive the notification message over a video channel, an audio channel, or a data channel.

The control unit 230 controls the output unit 220 to output the received notification message through a screen or a speaker. If the notification message is multiplexed into a video signal and then transmitted, the output unit 220 may display the notification message by processing and outputting the received video signal. Alternatively, if the notification message is transmitted over a data channel, the output unit 220 may display the notification message in a rendered image by detecting the notification message to generate a rendered image, and multiplex the rendered image into a video signal as an image.

The content of the notification message may be set differently according to a manufacturer or a user, and may include information regarding a user who desires to use the media processing apparatus 100 as described with respect to FIG. 2.

If the terminal device 200 of FIG. 6 is the second terminal device 200-2 of FIG. 1, the control unit 230 transmits a control signal input through the input unit 240 to the media processing apparatus 100 through the interface unit 210, and then receives an error message.

The output unit 220 processes the error message to be a rendered image, multiplexes the rendered image into a video signal, and outputs the multiplexed signal.

The terminal device 200 may not have the right to control the media processing apparatus 100, but may have the right to receive a media signal from the media processing apparatus 100 and output the signal. In this case, the interface unit 210 may receive a media signal over at least one of a video channel and an audio channel. The output unit 220 outputs the error message, converts the media signal received through the interface unit 210 to be in an appropriate format, and outputs the converted media signal through a screen and/or a speaker.

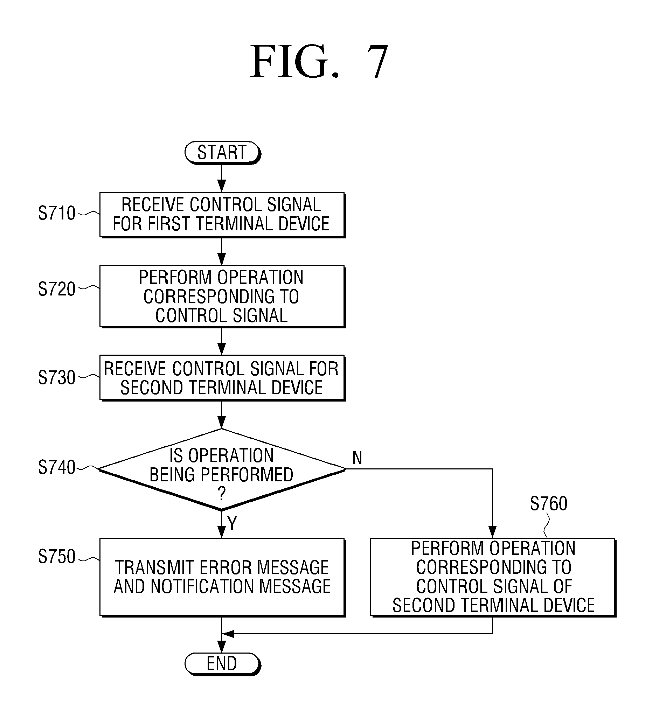

FIG. 7 is a flowchart illustrating a method of controlling a media processing apparatus according to an exemplary embodiment.

In FIG. 7, the control signal for the first terminal device is received (S710). The operation corresponding to the control signal is performed (S720). The control signal for the second terminal device is received (S730). In response to receiving the control signal for the second terminal device, it is determined whether the operation is still performed under the control of the first terminal device (S740).

If it is determined that the first terminal device has completed using the media processing apparatus, the operation corresponding to the control signal of the second terminal device is performed (S760).

However, if the first terminal device is still using the media processing apparatus, an error message is transmitted to the second terminal device, and a notification message is transmitted to the first terminal device (S750). The notification message and the error message are transmitted over a data channel, a video channel, or an audio channel.

As described above, when a plurality of users desire to use limited number of external devices, an appropriate notification message or error message may be transmitted according to the right to control the external devices. Therefore, a user may conveniently recognize whether his or her command is correctly input.

According to the various exemplary embodiments as described above, a user who desires to use a media processing apparatus is appropriately notified of an error message or a notification message, and thus the user may accurately and promptly recognize the state of the media processing apparatus.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A method of controlling a media processing apparatus that is connected to each of a first terminal device and a second terminal device through a communication interface, the method comprising:
receiving a first control signal that instructs the media processing apparatus to perform a first operation from the first terminal device over a first data channel between the media processing apparatus and the first terminal device through the communication interface;
performing the first operation in response to receiving the first control signal;
and
while performing the first operation, providing an error message to the second terminal device over a second data channel between the media processing apparatus and the second terminal device, in response to receiving a second control signal that instructs the media processing apparatus to perform a second operation transmitted from the second terminal device.

2. The method as claimed in claim 1, further comprising:
generating a notification message corresponding to the second terminal device;
adding the generated notification message to a video signal provided to the first terminal device to generate a multiplexed video signal; and
transmitting the multiplexed video signal to the first terminal device through a video channel between the media processing apparatus and the first terminal device.

3. The method as claimed in claim 1 or 2, further comprising:
generating a notification message corresponding to the second terminal device;
and
transmitting the notification message to the first terminal device through a data channel between the media processing apparatus and the first terminal device.

4. A media processing apparatus, comprising:
an interface unit that is connected to each of a first terminal device and a second terminal device through a communication interface;
a signal processing unit that generates a media signal, and provides the medial signal through the communication interface over at least one of a video channel and an audio channel; and
a control unit that controls an operation of the media processing apparatus in response to receiving a first control signal for controlling the media processing apparatus from the first terminal device and, while the media processing apparatus is controlled according to the first control signal received from the first terminal device, transmits an error message to the second terminal device through the data channel in response to receiving a second control signal for controlling the media processing apparatus from the second terminal device.

5. The media processing apparatus as claimed in claim 4, wherein the signal processing unit comprises:
a storage unit that stores message data;
a rendering unit that generates a notification message corresponding to the second terminal device using the message data stored in the storage unit; and
a multiplexer that multiplexes the rendered notification message into a video signal provided to the first terminal device,
wherein the control unit transmits the multiplexed video signal to the first terminal device through the video channel between the media processing apparatus and the first terminal device.

6. The media processing apparatus as claimed in claim 4 or 5, wherein the control unit transmits the notification message corresponding to the second terminal device to the first terminal device through the data channel between the media processing apparatus and the first terminal device.
